(19) Europäisches Patentamt
European Patent Office
Office européen des brevets

(11) EP 1 072 982 A2

(12) EUROPEAN PATENT APPLICATION

(43) Date of publication:
31.01.2001 Bulletin 2001/05

(51) Int. Cl.$^7$: G06F 17/30

(21) Application number: 00116441.7

(22) Date of filing: 28.07.2000

(84) Designated Contracting States:
AT BE CH CY DE DK ES FI FR GB GR IE IT LI LU MC NL PT SE
Designated Extension States:
AL LT LV MK RO SI

(30) Priority: 30.07.1999 JP 21661799

(71) Applicant:
MATSUSHITA ELECTRIC INDUSTRIAL CO., LTD.
Kadoma-shi, Osaka 571-8501 (JP)

(72) Inventors:
• Sato, Mitsuhiro
Atsugi-shi, Kanagawa-ken 243-0216 (JP)
• Ito, Hayashi
Matsudo-shi, Chiba-ken 271-0045 (JP)

(74) Representative:
Manitz, Finsterwald & Partner
Postfach 22 16 11
80506 München (DE)

(54) Method and system for similar word extraction and document retrieval

(57) Similar words for a given sequence of letters are extracted from a document database of documents is provided. The occurrence pattern of the similar words is similar to that of the given sequence. A feature vector table which contains a first feature vector for each of words in the document database is prepared. Statistical information on the given sequence is obtained through a retrieval of the document database with respect to the given sequence. From the statistical information, a second feature vector with respect to the given sequence is calculated. A degree of similarity between the second feature vector and each of the first feature vectors is calculated Such words as yield degrees of similarity higher than a predetermined value is selected.

FIG. 2

**Description**

BACKGROUND OF THE INVENTION

1. Field of the Invention

The invention generally relates to a document retrieval system and, more specifically, to an occurrence pattern-based similar word extractor and its applications to the query expansion and the multilingual document retrieval.

2. Description of the Prior Art

As numerous documents have come to be computerized and distributed due to the spread of the Internet and personal computers, electronic search for documents is getting popular. Conventional document retrieval systems usually make a reference for query key words input by a user and provide documents that include the key words as the result of retrieval. However, since there may be possibly a lot of documents that describe the same subject matter in different expressions, it is difficult for a user to find all such documents as meet his or her desire by using only key words the user hits on. For this purpose, various query expansion techniques have been proposed so far which expand a given query for retrieval.

Also, requests for the retrieval of information in languages other than user's mother tongue are increasing with an improvement of circumstance that enables the access to information in the world through spreading of Internet. In order to meet such requests, studies on multilingual document retrieval methods are increasing recently.

An example of query expansion techniques is proposed by Akamine et al., "Information Retrieval System with Query Expansion Using WordNet" in the proceedings of the fifty second national convention of Information Processing Society of Japan (IPSJ), 1996, pp. 4-201 — 4-202. In this system, synonyms for query terms are found by using a fixed thesaurus and the query is expanded with the found synonyms. However, since the found synonyms are dependent on the vocabulary of the fixed thesaurus, it may not be suitable for retrieval in a special field.

Another query expansion technique is proposed by K. Saito et al., "Concept-Based Query Expansion", IPSJ Study Group Report, Information Study Fundamentals 47-10, 1997, pp. 67-74. In this system, each of words that occurs in a document database to be searched, i.e., each word of a dictionary, is mapped on a vector space the dimensions of which correspond to the documents constituting the document database. The degree of similarity between two words is determined by the inner product of vectors defined for the two words in the vector space. Similar words relevant to desired documents are obtained and used for the expansion of the query.

However, the degree of similarity can not obtained for a word that is not included in the vocabulary of the dictionary in just mentioned query expansion technique. For this reason, the technique is not applicable to queries containing any query term which is not included in the dictionary.

A multilingual document retrieval system is described by L. Ballesteros et al., "Resolving Ambiguity for Cross-language Retrieval" ACM-SIGIR98, 1998, pp. 64-71. In reference 3, all possible target language translations are listed for a given source language query by using parallel corpora which contain a set of documents and their translations in one or more languages. A target language query is generated by narrowing the listed translations down by using co-occurrence statistics.

Since the use of one or more translation dictionary is assumed in this multilingual system, selected translations depend on the vocabulary of the translation dictionary, which means that no translation is obtained for terms that are not included in the vocabulary. If the system is applied to a document database in a language in which a space is not left between words as in case of Japanese and if a given query includes a sequence of letters (usually Chinese characters) which is not included in the vocabulary, then no translation is obtained for the letter sequence.

SUMMARY OF THE INVENTION

The present invention is intended for solving above and other problems, and makes it an object to provide a similar word extractor capable of extracting, from a predetermined document database, similar words for a given query term which has not yet been widely accepted.

It is another object of the invention to provide query expansion techniques incorporating the similar word extractor.

It is further object of the invention to provide a multilingual document retrieval system incorporating the similar word extractor.

According to an aspect of the invention, a method of and a system for extracting similar words for a given sequence of letters from a document database of documents is provided. The occurrence pattern of the similar words is similar to that of the given sequence. A feature vector table which contains a first feature vector for each of words in the document database is prepared. Statistical information on the given sequence is obtained through a retrieval of the document database with respect to the given sequence. From the statistical information, a second feature vector with respect to the given sequence is calculated. A degree of similarity between the second feature vector and each of the first feature vectors is calculated. Such words as yield degrees of similarity higher than a predetermined value is selected.

The feature vector table is prepared by generating a word set comprising the words in the document database; generating an index file from the document database, the index file being such that statistical information for each of words used in the document database can be obtained from the index file; and calculating each first feature vector from the index file. In order to obtain statistical information, the index file is searched for the given sequence.

According to an aspect of the invention, a query expansion method and system for use in a document retrieval apparatus comprising a first document database and a retriever is provided. A given query is expanded to feed the retriever. For this purpose, similar words of a query word in the given query are utilized. The similar words of the query word are extracted from a second document database of documents. The occurrence pattern of the similar words is similar to that of the query word. The extraction of the similar words is achieved by preparing a feature vector table which contains a first feature vector for each of words in the second document database; obtaining statistical information on the query word through a retrieval of the second document database with respect to the query word; calculating a second feature vector with respect to the query word from the statistical information; calculating a degree of similarity between the second feature vector and each of the first feature vectors; and selecting, as the similar words, such words as yield degrees of similarity higher than a predetermined value.

The first and second document databases are preferably the same thing.

According to another aspect of the invention, a translation extracting method and system are provided. For a given word in a source language, translations in a target language are provided such that an occurrence pattern of the given word in a source-language document database being the same as that of translations in a target-language document database if one of the two document databases is a translation of the other. The target-language translations are obtained by preparing a feature vector table which contains a first feature vector for each of words in the target-language document database; obtaining statistical information on the query word through a retrieval of the source-language document database with respect to the query word; calculating a second feature vector with respect to the query word from the statistical information; calculating a degree of similarity between the second feature vector and each of the first feature vectors; and selecting, as the translations, such target-language words as yield degrees of similarity higher than a predetermined value.

The feature vector table is prepared by generating an index file from the target-language document database, the index file being such that statistical information for each of words used in the target-language document database can be obtained from the index file; and calculating a first feature vector for each word in a given dictionary (or a given set of words) from the index file. In order to obtain statistical information, the index file is searched for the query word.

According to further aspect of the invention, a query expanding method and system for use in a document retrieval system comprising a first document database and a retriever are provided. The query expansion means converting a source-language query into a target-language query to feed the retriever. The query expansion is achieved by extracting a translation of each of query words in the source-language query from a second document database of target-language documents and replacing each query word in the source-language query with the translation of the query word. The occurrence pattern of the translation is similar to that of the query word. The extraction of the translation is achieved by preparing a feature vector table which contains a first feature vector for each of words in the target-language document database; obtaining statistical information on the query word through a retrieval of the source-language document database with respect to the query word; calculating a second feature vector with respect to the query word from the statistical information; calculating a degree of similarity between the second feature vector and each of the first feature vectors; and selecting, as the translations, such target-language words as yield degrees of similarity higher than a predetermined value.

According to an aspect of the invention, a method of receiving a given letter sequence and providing bisected letter sequences with a sufficient propriety of division is provided. The method comprises the steps of forming a retrieval expression for retrieving documents which contains all of the letters of the letter sequence but does not contain the letter sequence itself; obtaining statistical information by executing a retrieval based on the retrieval expression; generates a feature vector for the retrieval expression from the statistical information, the feature vector being referred to as "mask feature vector"; dividing the letter sequence into two subsequences shifting the division point one by one to obtain N-1 sets of bisected letter sequences, where N is the number of letters in the letter sequence; calculate a feature vector for each of the bisected letter sequences of each of the N-1 sets; masks each of the calculated feature vectors with the mask feature vector and normalizing the masked calculated feature vector; calculating a degree of similarity for each of the N-1 sets, the degree of similarity being defined as an inner product of the bisected letter sequences of each of the N-1 sets; and outputting such bisected letter sequences as have a degree of similarity larger than a threshold.

According to another aspect of the invention, for a given word, at least one variant including the given word can be obtained by using the above-described translation extracting system. In order to achieve this, the translations are first obtained for the given word by using the translation extracting system. The translation extracting system is configured by replacing the feature vector table with a feature vector table which contains a third feature vector for each of words in the first-language document database and by exchanging the first-language document database and the second-language document database. Second translations for each of the translations are obtained as the variant(s) by using reconfigured translation extracting system.

BRIEF DESCRIPTION OF THE DRAWING

The features and advantages of the present invention will be apparent from the following description of an exemplary embodiment of the invention and the accompanying drawings, in which:

FIG. 1 is a schematic block diagram showing an exemplary arrangement of a document retrieval computer system in which the present invention can be embodied;
FIG. 2 is a diagram showing an exemplary arrangement of a similar word extractor according to the invention;
FIG. 3 is a flowchart showing the operation executed by the processor 20 under the control of the similar word extractor 130 according to the invention;
FIG. 4 is a diagram showing an exemplary structure of the feature vector table 160;
FIG. 5 is a flowchart showing an operation of a query expander using the similar word extractor 130 of FIG. 3;
FIG. 6 is a diagram showing an arrangement of a translation extractor system 1300a for use in a query expander for cross-language retrieval;
FIG. 7 is a flowchart of a query expander program 31b executed in combination with the extractor 130;
FIG. 8 is a flowchart showing an exemplary operation of a letter sequence divider according to the invention;
FIG. 9 is a diagram showing an example of a retrieval expression for a letter sequence

<div align="center">

**"自律移動ロボット";**

</div>

FIG. 10 is a diagram showing seven sets of divided sequences for the letter sequence

<div align="center">

**"自律移動ロボット";**

</div>

FIG. 11 is diagram showing an example of the processing of step 212;
FIG. 12 is a diagram showing the way of judging whether each of divided sequence sets has a sufficient division propriety; and
FIG. 13 is a flowchart showing an exemplary operation of a variant finder 300 according to the invention.

Throughout the drawing, the same elements when shown in more than one figure are designated by the same reference numerals.

DETAILED DESCRIPTION OF THE PREFERRED EMBODIMENTS

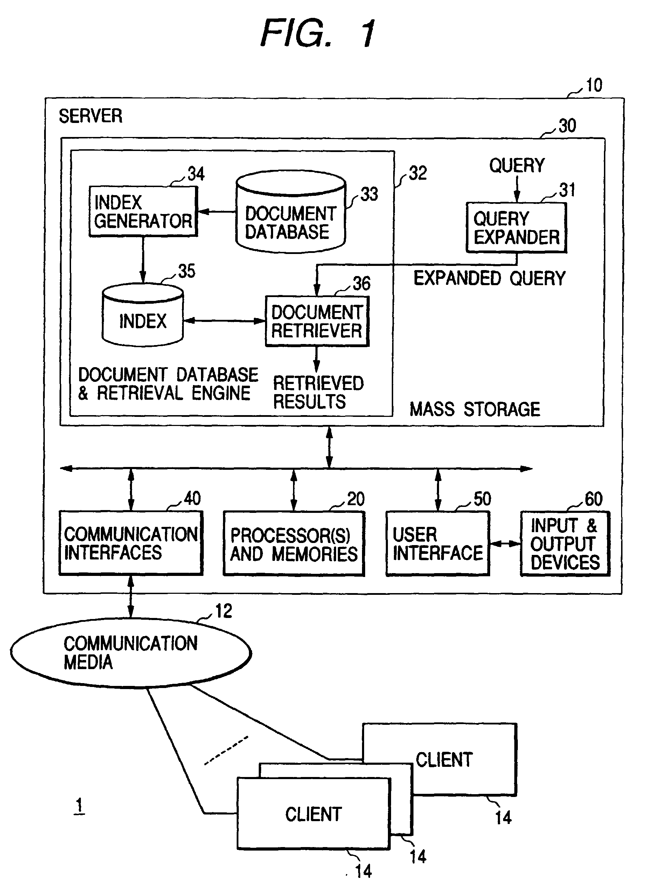

FIG. 1 is a schematic block diagram showing an exemplary arrangement of a document retrieval computer system in which the present invention can be embodied. The document retrieval computer system 1 typically comprises a server 10, communication media 12 and numerous clients 14. In the system 1, the server receives queries from (typically remote) clients 14 and responsively returns retrieval results to the clients. The communication media 12 generally includes various communication networks such as the internet, LAN, etc. Though a client-server configuration is shown in FIG. 1, the invention may be implemented as a standalone computer system, in which case the communication media 12 and the clients 14 would be eliminated from the figure.

The server 10, which is typically a computer with a capacity and a speed necessary for providing document retrieval services to some clients 14 at a time, comprises one or more processor(s) and memories 20 which serves as the core of the computer; mass storage 30 for storing various programs and data; communication interfaces 40 for communication with the clients 14; a user interface 50; and input and output devices 60 for permitting an administrator to operate the server 10. The mass storage 30 preferably includes a hard disc (not shown) for storing programs and data necessary for document retrieval. The mass storage 30 may further include, e.g., one or more optical disc(s) (not shown) for storing a document database 33. The above-described server 10 and/or the components 20, 30 and 40 through 60 may be any suitable standard ones.

Each client 14 may be any suitable terminal or personal computer with a communication interface (not shown) such as a modem or a network interface.

The mass storage 30 typically stores a document database/retrieval engine 32 and a query expander 31 for receiving a query from a client 14 and providing an expanded version of the query in accordance with the principles of the invention as detailed later. The document database/retrieval engine 32 and a query expander 31 may be a combination of any suitable document database and any suitable retrieval engine, and typically comprises a document database 33 which contains a lot of documents, an index generator 34, an index file 35 generated by the index generator 34 from the database 33, and a document retriever 36 for retrieving documents most relevant to the query by using the index file 35.

It will be helpful for better understanding the invention to define some terms used wherein prior to the description of the following illustrative embodiments.

Unless otherwise stated, the term "document" should be taken to mean an entire document or any portion thereof, such as a title, an abstract, or one or more clauses, sentences, or paragraphs.

Unless otherwise stated, the term "query" should be taken to mean text that is input for the purpose of selecting a subset of documents from a document database 33. A query typically contains a plurality of query terms in the form of a logical expression or a natural language. Each query term is a sequence of letters in a supported language, which sequence typically includes one or more words of the supported language. That is, each of the letter sequences (or query terms) that constitutes a query may be single words, compound words, phrases, and other multi-word constructs. A space may or may not be left between single words in a letter sequence depending on the language used.

Unless otherwise stated, the term "word" should be taken to include single words, compound words, phrases, and other multi-word constructs. Furthermore, the terms "word" and "term" are often used interchangeably. Terms and words include, for example, nouns, proper nouns, complex nominals, noun phrases, verbs, adverbs, numeric expressions, and adjectives.

In the following, we disclose:

   (1) a similar word extractor;
   (2) a query expander (31a) using the similar word extractor;
   (3) a query expander (31b) which is adapted to a document database/retrieval engine 32 that supports a language different from the one used for the query (i.e., a query expander for cross-language retrieval);
   (4) a letter sequence divider;
   (5) a variant (or equivalent word) finder; and
   (6) a preferred query expander (31c) based on the similar word extractor and incorporating the letter sequence divider and the variant finder.

The similar word extractor, the letter sequence divider and the variant finder are powerful tools for use in the query expander 31. The letter sequence divider and the variant finder are implemented with the similar word extractor as will be seen from the following description.

Similar Word Extractor

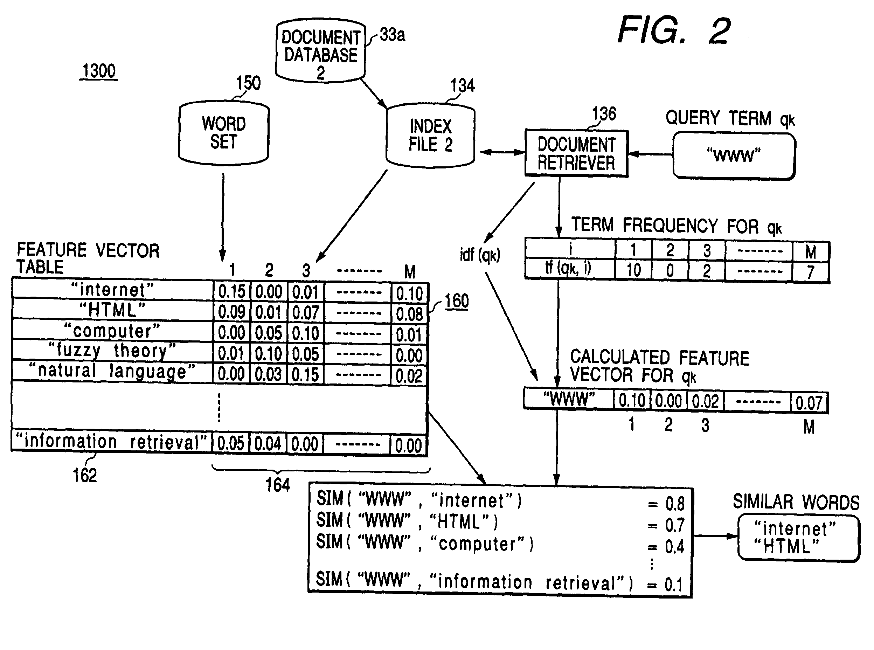

FIG. 2 is a diagram showing an exemplary arrangement of a similar word extractor system 1300 according to the invention. In FIG. 2, a one-way arrow drawn from a source to a destination indicates that data of the destination is obtained from the source, and a two-way arrow drawn between a block indicative of a program and a block indicative of a data structure indicates that the program refers to the data structure.

Prior to an actual operation of similar word extraction, it is preferable to prepare a second index file 134 and a feature vector table 160 from a second document database 33a for use in a similar word extraction operation.

Though the second document database 33a may be different from the document database 33 of the document database/retrieval engine 32, it is strongly recommended that the second document database 33a should be identical to the document database 33.Even if the second document database 33a is different from the document database 33, the second document database 33a preferably has the same characteristics that the document database 33 has in order to raise the accuracy (i.e., relevance) of extracted words. (For this reason, the second document database 33a is hereinafter referred to as "the document database 33a" or simply "the database 33a".)

On the other hand, the second index file 134 has not necessarily to be the same as the index file 34 of the document database/retrieval engine 32. However, it is noted that the second index file 134 is preferably so arranged that when the second index file 134 is searched by a document retriever 136 for a query term contained in the query from a client 14, the document retriever 136 can obtain statistical information such as a frequency of occurrences of the query term in each of the documents in the database 33a (referred to as "document-based term frequency") and the number of documents that contain the query term even if the query term is any sequence of letters, i.e., even if the query term is such a word as can not found in a dictionary. Such index file 134 can be realized in accordance with the principles of Japanese unexamined patent publication No. Hei08-249354 by the present applicant.

The feature vector table 160 is generated as follows. It is assumed that the number of documents $\{D_i \mid i = 1, 2,..., M\}$ in the database 33a is M; and a suitable set of words (WORD SET) 150 is given that contains terms (or words) $\{T_j \mid J = 1, 2,..., N\}$, where N is the total number of kinds of words in the database 33a. For each word $T_j$ in the word set 150, a M-dimensional feature vector $t_j$ is calculated. Each feature vector $t_j$ is defined as:

$$t_j = (w(j,1), w(j,2), ...w(j, i),...,w(j, M)) \tag{1}$$

As seen from expression (1), the elements of the feature vector $t_j$, $w(j,1)$, $w(j,2)$, $...w(j, i),...,w(j, M)$ correspond to the documents $D_1, D_2, ..., D_i, ...D_M$. The i-th element $w(j, i)$ of the feature vector $t_j$ is calculated as a weight based on a $tf(j,i)*idf(j)$ score well-known in the art. "$tf(j,i)$" is the number of occurrences of a term $T_j$ within a given document $D_i$, and is referred to as "the term frequency" of term $T_j$ in document $D_i$. "$idf(j)$" is referred to as "the inverse document frequency" for term $T_j$, and is defined as

$$idf(i,j) = \log(M/d_j).$$

where $d_j$ is the number of documents in which the term $T_j$ occurs. (For further details of the $tf(j,i)*idf(j)$ score, refer to G. Saltion and M.J. McGill, "Introduction to Modern Information Retrieval", McGraw-Hill Publishing Company, 1983.) In this case, the feature vector $t_j$ may be so normalized as to be 1 in magnitude or length. In this way, the feature vector table 160 is generated, and is now ready for a similar word extraction operation.

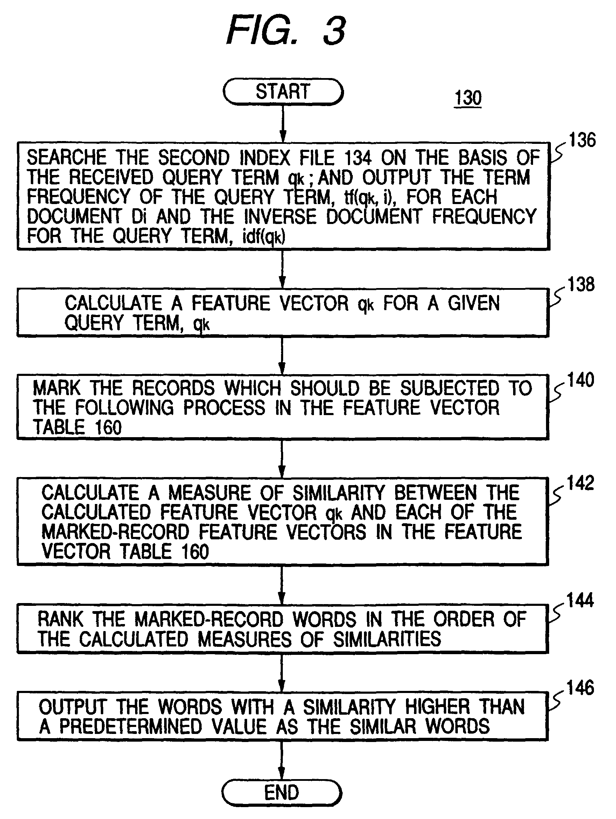

FIG. 3 is a flowchart showing the operation executed by the processor 20 under the control of the similar word extractor 130 according to the invention. The similar word extractor 130 is invoked in response to a reception of a query from the remote client 14. Though similar words are obtained for each query term in a given query in the following specific example, it should be noted that similarly words may be obtained for a given query itself in the same manner as described below.

If a k-th query term $q_k$ in the received query is received, then the processor 20 searches the second index file 134 on the basis of the received query term $q_k$ and outputs the term frequency of the query term, $tf(q_k,i)$, for each document $D_i$ and the inverse document frequency for the query term, $idf(q_k)$ in step 136. The processor 20 calculate a feature vector $q_k$ for a given query term $q_k$ from the inverse document frequency $idf(q_k)$ and the term frequencies of the query term, $tf(q_k,1)$, $tf(q_k,2)$,...., $tf(q_k,M)$ in step 138.

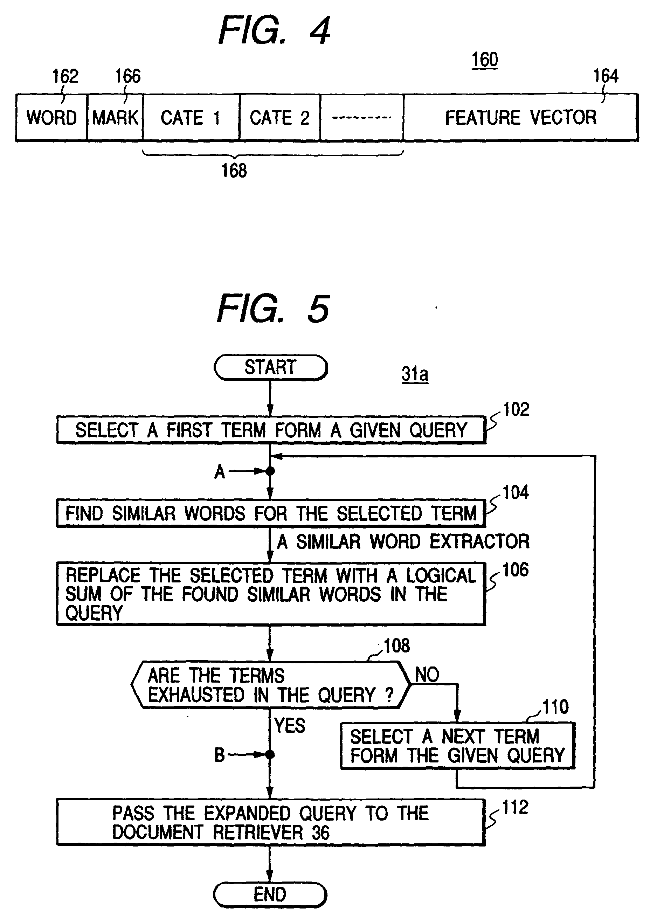

Step 140 marks the records which should be subjected to the following process in the feature vector table 160. In order to facilitate this step, it is preferable to configure the structure of the feature vector table 160 as shown in FIG. 4. Each record of the feature vector table 160 may contain one or more category fields (CATE 1, CATE 2,...) 168 for containing category code, subcategory code and so on and a mark field 166 for containing a special code indicating that the record is marked as well as the word field 162 and the feature vector fields 164. If it is desired to calculate the degrees of similarity only for the words of one or more specific field in the next step, then the special code is written in the mark fields 166 of the records in which the value of the category field 168 falls on the specific field. Also, if it is desired to exclude the query term itself from the following process, then the special code has only to be eliminated from the mark field 166 of the record for the query term $q_k$ if the term $q_k$ exists in the feature vector table 160, i.e., in the word set 150.

However, it should be noted that the query term $q_k$ can not be always found in the word set 150 or the feature vector table 160 only because the inverse document frequency and the term frequencies have been successfully obtained for the query term $q_k$ through the document retriever 136. This is because the second index file 134 is so arranged as to cause the inverse document frequency and the term frequencies to be obtained for any query term $q_k$ as described above. In other words, such statistical information can be obtained even for a query term (or even for a query itself) which is not found in the word set 150 through a retrieval using the second index file 134.

Then, step 142 calculates the degree of similarity between the calculated feature vector $q_k$ and each of the marked-record feature vectors in the feature vector table 160. The degree of similarity between feature vectors is calculated as an inner product of the feature vectors. For example, the degree of similarity between the query term "www" and the word "internet", i.e., SIM(www, internet) is calculated as follows:

$$SIM(www, internet) = 1.10*0.15 + 0.00*0.00 + 0.12*0.01 + ..... + 0.07*0.10$$
$$= 0.9$$

Alternatively, the degree of similarity between vectors cam be calculated by using statistic information such as the mutual information, t-score. For further details for the mutual information and t-score, refer to K. W. Church and R. L. Mercer, "Introduction to the Special Issue on Computational Linguistics Using Large Corpora", Computational Linguistics, Vol. 19, No. 1, 1993, pp. 1-24.

Step 144 ranks the marked-record words in the order of the calculated degrees of similarities. Step 146 outputs the words with a similarity higher than a predetermined value as the similar words, and end the operation. In FIG. 2, words "internet" and "HTML" are output as the similar words for the query term "www". Thus, Similar words can be obtained for any query term.

In the above embodiment, all of the M documents in the document database 33a has been used. However, the database 33a may be divided by the fields into document subsets for respective fields; an second index file 134 and a feature vector table 160 are prepared for each document subset; and, for a given field, the second index file 134 and the feature vector table 160 are used which are associated with the given field. Alternatively, a document database 33a, a second index file 134 and a feature vector table 160 may be prepared for each of the desired fields.

In the above embodiment, the second index file 134 and the feature vector table 160 have been prepared prior to an actual similar word extraction. However, if the word sets 150 contains very few words, then the second index file 134 and the feature vector table 160 may be generated after the calculation of feature vector in step 138.

Though the word set 150 has been used for generating the feature vector table 160, the feature vector table 160 may be generated directly from the database 33a.

The word set 150 may contain either all of the words that occurs in the document database 33a or only the words in one or more specific field. By limiting the vocabulary of the word set 150, the records in the feature vector table 160 can be limited accordingly.

Query Expander Using the Similar Word Extractor

FIG. 5 is a flowchart showing an operation of a query expander using the similar word extractor 130 of FIG. 3, which query expander 31a is an illustrative embodiment of the query expander 31 of FIG. 1. In FIG. 5, step 102 selects a first query term from a given query. Step 104 finds similar words for the selected query term by using the similar word extractor 130. Step 106 replaces the selected query term in the query with, for example, a logical sum of the found similar words. Decision step 108 makes a test to see if the terms have been exhausted (or replaced) in the query. If not, then the control is passed to step 110, where a next term is selected in the given query and the control is returned to step 104. If the test result is YES in step 108, then the control is passed to step 112, where the expanded query is passed to the document retriever 36, and the operation is terminated.

On receiving the expanded query, the document retriever 36 searches the index file 35 on the basis of the received expanded query in a conventional manner.

For example, if a user at a client enters (www 〈and〉"search engine") as a query in order to know about search engines on the WWW (world wide web), then the similar word extractor 130 will provide "internet" as a similar word for the query term "www" and "retrieval" as a similar word for the query term "search engine", and accordingly the query expander 31a expands the query (www 〈and〉"search engine") to provide an expanded query ((www 〈or〉internet) 〈and〉("search engine" 〈or〉retrieval)). This enables an inclusion of a document with an expression "retrieval services on the internet" in the retrieval results.

In the query expander 31a, all of the query terms have been expanded with the similar word extractor 130. Alternatively, only terms of the query terms that are not found in the word set 150 may be expanded with the word extractor 130.

The similar words found for a selected query term in step 104 have been used in place of the selected (or original) term in the query in step 106. Alternatively, the found similar words may be added to the original term.

Though the query expander 31a has expanded each of the query word in the given query, the query expander 31a may be so configured as to generate a single retrieval condition for similar word extraction, pass the generated retrieval condition to the similar word extractor 130 to obtain the similar words, and pass the obtained similar words to the document retriever 36.

Query Expander for Cross-language Retrieval

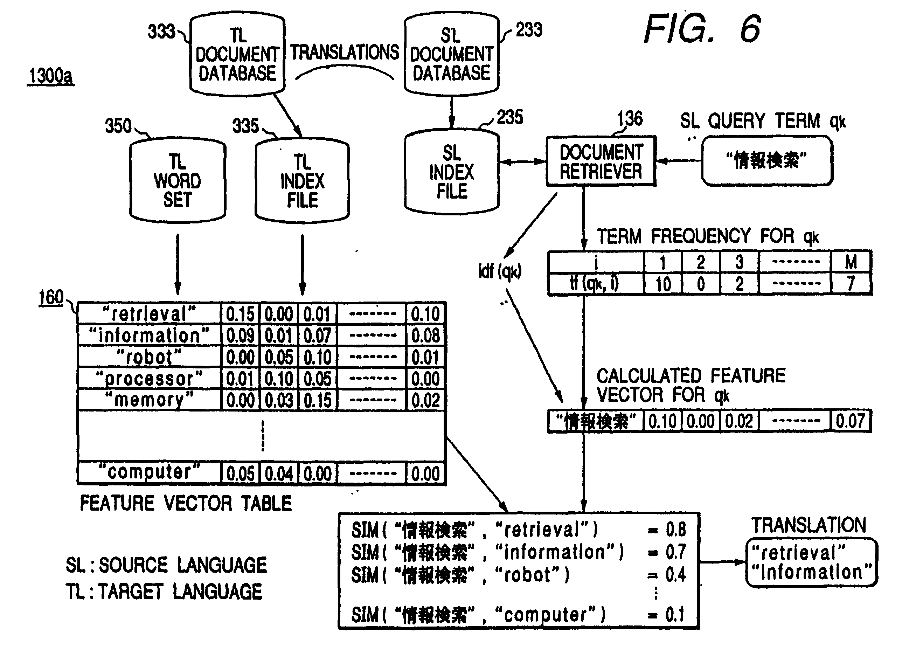

FIG. 6 is a diagram showing an arrangement of a translation extractor system 1300a for use in a query expander for cross-language retrieval. As seen from FIG. 6, the translation extractor system 1300a is closely similar to the similar word extractor system 1300 of FIG. 2.

The two extractor systems 1300a and 1300 are identical in an actual extraction operation except that the translation extractor system 1300a uses a source-language index file 235 instead of the second index file 134. The source-language (SL) index file 235 is generated from a SL document database 233. For this reason, the similar word extractor 130 shown as the flowchart in FIG. 3 can be used for the translation extraction operation by replacing the second index file 134 with the SL index file 235. Also, in this case, if more than one translation is to be output in step 146, then the translations are preferably output in the form of logical product.

Also, what differs from the similar word extractor system 1300 is that the feature vector table 160 is generated from a given target-language (TL) word set 350 and a TL index file 335 which is generated from a TL document database 333. The TL document database 333 of FIG. 6 is preferably an identical to the document database 33 of FIG. 1. However, though the TL document database 333 may be different from the document database 33 of FIG. 1, if so, then the two databases 333 and 33 should be of the same language and the same field.

The SL document database 233 and the TL document database 333 has to be translations of each other. If a translated version of one document database can not obtained, one document database 233 or 333 may be obtained through a machine translation of the other document database 333 or 233, respectively.

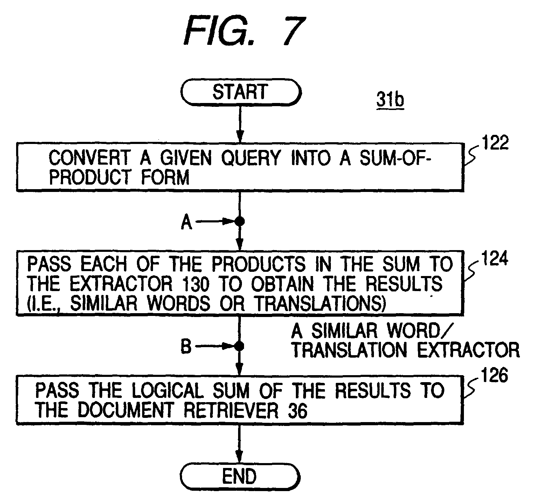

FIG. 7 is a flowchart of a program 31b which operates as a query expander for cross-language retrieval when executed in combination with the translation extractor 130 in the translation extractor system 1300a. The query expander program 31b is executed in response to a reception of a query. In FIG. 7, the processor 20 convert the given query into a sum-of-product form in step 122. Step 124 passes each of the products in the sum to the extractor 130 to obtain the results (translations in this case). Then, step 126 passes the logical sum of the results to the document retriever 36.

In this way, the query expander 31b is adapted to a document database/retrieval engine 32 that supports a language (i.e., the target language) different from the one used for the query (i.e., the source language). It is noted that the query expanders 31a and 31b can be used interchangeably and can be used for both the query expansion in a monolingual retrieval and the query expansion for cross-language retrieval. Though the given query is converted into a sum-of-product form in step 122, the given query may be passed as it is to the query expander 130.

As seen from FIG. 6, if a use at a client 14 enters

(情報検索 ＜or＞ 情報

抽出)

in Japanese, which corresponds to ("information retrieval" 〈or〉"information extraction") in English, then the extractor 130 in the translation extractor system 1300a provides translations "information" and "retrieval" for the query term

"情報検索"

and also provides translations "information" and "extraction" for the query term

"情報抽出".

If more than one translation is extracted for a query term, the extractor 130 of the translation extractor system 1300a outputs the translations in the form of logical product as described above. Accordingly, a retrieval condition

((information 〈and〉retrieval) 〈or〉(information 〈and〉extraction)) is passed to the document retriever 36.

As seen from FIG. 6, once the feature vector table 160 and the SL index file 235 have been generated, the SL and TL databases 233 and 333, the TL word set 350 and the TL index file 335 are no longer necessary. Preparing feature vector tables 160 for various language by machine translating a document database in one language, a query expander adapted to multilingual document retrieval.

Letter Sequence Divider

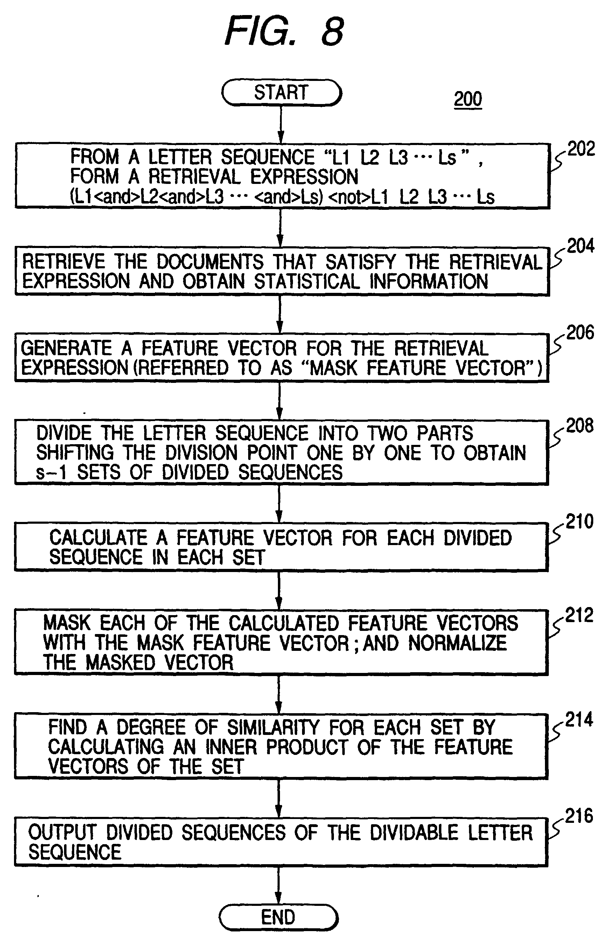

FIG. 8 is a flowchart showing an exemplary operation of a letter sequence divider 200 according to the invention. If the letter sequence divider 200 receives a query term, i.e., a sequence of letters (e.g., "L1L2L3.....Ls" where s is the number of letters), then step 202 forms a retrieval expression

(L1 (and) L2 (and) L3..... (and) Ls) (not) L1L2L3.....Ls.

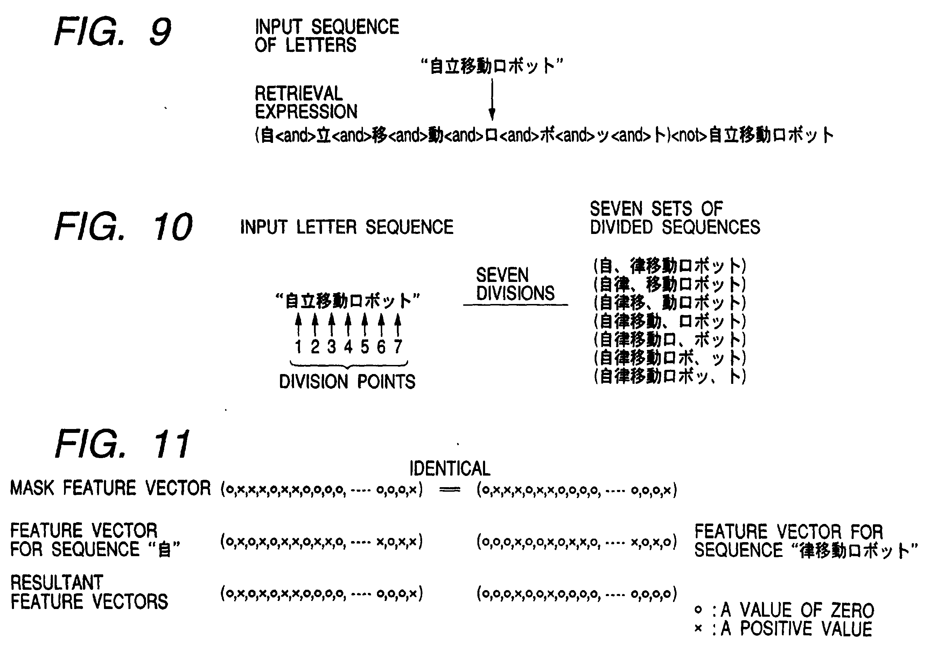

FIG. 9 shows an example of such retrieval expression for a letter sequence

"自律移動ロボット",

which is a Japanese term that means "autonomous mobile robot".

Step 204 retrieves the documents that satisfy the retrieval expression and obtain statistical information such as described in step 136. Step 206 generates a feature vector for the retrieval expression (referred to as "mask feature vector"). The documents that satisfy the retrieval expression are such documents as include any of the letters of the letter sequence but does not include the letter sequence itself. For example, a document containing only an expression

"自律的に移動するロボット"

is selected, while a document containing only an expression

"自律移動ロボットについて"

is not selected.

Step 208 divides the letter sequence into two parts shifting the division point one by one to obtain s-1 sets of divided sequences. The division may be achieved by means of morpheme analysis, if it yields divided subsequences. FIG. 10 shows the seven sets of divided sequences for the letter sequence

"自律移動ロボット".

For each divided sequence in each set, step 210 calculates a feature vector. For a set of divided sequences

(自、律移動ロボット)

for example, step 210 calculates a feature vector for a subsequence

"自"

and a feature vector for a subsequence

"律移動ロボット".

The feature vector for a subsequence

"自"

have positive values in elements thereof corresponding to dimensions for the documents that include the subsequence

"自".

For example, the feature vector for the subsequence

## "自"

has a positive value in a dimension for the document that contains only

## "自由の追求".

Then, step 212 masks each of the calculated feature vectors with the mask feature vector obtained in step 206, and normalizes the masked vector so as to be 1 in length. Masking a feature vector with the mask feature vector means leaving, as they are, elements of the feature vector that correspond to such elements of the feature vector as have positive values and making the other elements of the feature vector zero. FIG. 11 is diagram showing an example of the processing of step 212. In FIG. 11, the feature vectors for a set

## (自、律移動ロボット)

are masked with the mask feature vector. In the figure, the elements or dimensions with a value of 0 is denoted with "o", and the elements or dimensions with a positive value is denoted with "x". In the resultant feature vectors in this example, dimensions for a document that contains only

## "自由の

## 追求",

a document that contains only

## "自律移動ロボット"

and so on have a value of 0; and only the dimensions for the documents in which both of the letter subsequences

## "自" and "律移動ロボット"

occur independently without succeeding each other have positive values.

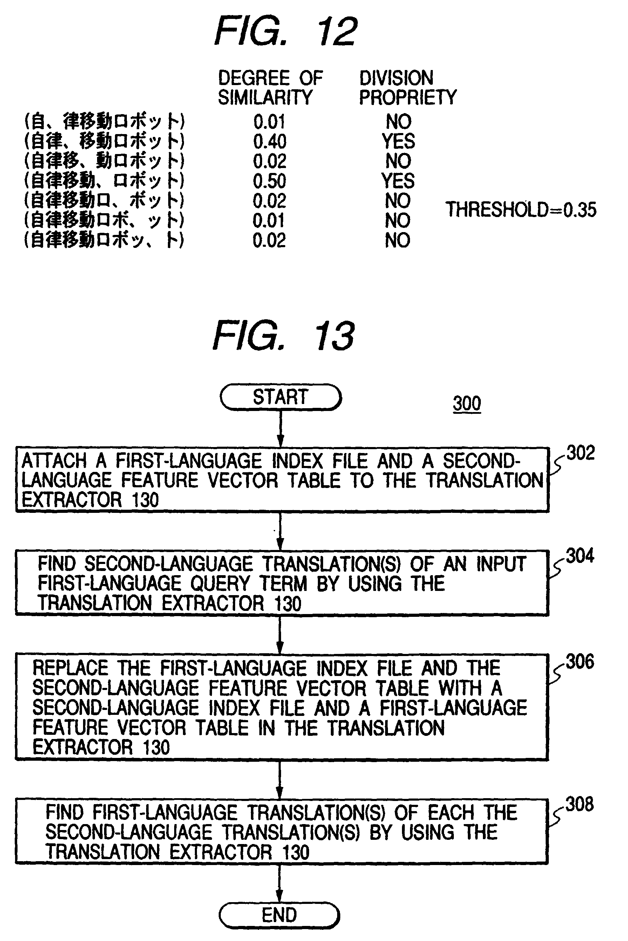

Step 214 finds the degree of similarity for each set by calculating an inner product of the feature vectors of the set. FIG. 12 is a diagram showing the divided sequence sets, the respective degrees of similarity, and respective division proprieties judged by a threshold of 0.35. According to this embodiment, if the divided sequences of a letter sequence set occur in common more frequently in a document, the degree of similarity between the divided sequences of the letter sequence set becomes the higher. Since the documents that contain a letter sequence as it is are excluded in steps 202 and 212, frequent independent occurrences of the divided sequences yields a higher degree of similarity. Independently occurring letter sequences are thought to be ones that make sense by themselves.

Step 216 outputs divided sequences of the letter sequences whose degrees of similarity is equal to or more than the threshold. Since the threshold is set to 0.35 in the example of FIG. 12, two of the divided sequence sets, i.e.,

## (自

律、移動ロボット) and (自律移動、ロボット)

are judged to be of good propriety in division and accordingly output.

As described above, a letter sequence divider 200 according to the invention tries all possible division of a given letter sequence to yield bisected letter sequences with a sufficient propriety of division.

In the path with a dot labeled "A" in FIGS. 5 and 7, the letter sequence divider 200 can be utilized. In FIG. 5 for example, if the term is not found in the word set 150, then bisected letter sequences are obtained from the term by using the letter sequence divider 200 and used in place of the term.

Variant Finder

FIG. 13 is a flowchart showing an exemplary operation of a variant finder 300 according to the invention. In FIG. 13, step 302 attaches a first-language index file and a second-language feature vector table 160a to the translation extractor 130 of FIG. 3. Step 304 finds second-language translation(s) of an input first-language query term by using the translation extractor 130. If the input first-language query term is, e.g., an Japanese term

"

ギリシャ",

which corresponds to an English word "Greek", then it is assumed that a second-language (say, English) translations "GREECE" is obtained as the translation.

Then, step 306 replaces the first-language index file and the second-language feature vector table with a second-language index file and a first-language feature vector table, respectively in the translation extractor 130. Step 308 finds first-language translation(s) of each the second-language translation(s) by using the translation extractor 130. In this step, an input term "GREECE" will cause three translations

"ギリシャ", "ギリシヤ" and "ギリ

シア"

to be output. In this case, these three variants are obtained for the input term

"ギリシャ".

If a word has variant(s), then an identical expression is usually used in a document. Since variants are hardly used in a single document, though the variants are closely similar to each other, the similar word extractor 130 can not usually extract such a variant.

According to the variant finder 300 of the invention, a letter sequence the second-language translation of which is identical to the second-language translation of an input term can be obtained as a variant of the input term. In other words, if a word has one or more variant in a first language and a second language has only one expression that corresponds to the word, then, for a member of such a word group, the other variant(s) can be obtained by using the variant finder 300.

In the path with a dot labeled "B" in FIGS. 5 and 7, the variant finder 300 can be utilized. Specifically, the obtained query is searched for words written in Japanese "katakana" letters which words tend to have variant(s). For each of the found words, the variant(s) are found by using the variant finder 300, and a logical sum of the found variant(s) and the original word are used in place of the original word. Doing this enables a further expansion of the query, resulting in an effective document retrieval.

The disclosures of all articles and references, including patent documents, mentioned in this application are incorporated herein by reference as if set out in full.

Many widely different embodiments of the present invention may be constructed without departing from the spirit and scope of the present invention. It should be understood that the present invention is not limited to the specific embodiments described in the specification, except as defined in the appended claims.

## Claims

1. A method of extracting similar words for a given query from a document database of documents, the occurrence pattern of the similar words being similar to that of the given query, the method comprising the steps of:

   preparing a feature vector table which contains a first feature vector for each of words in said document database;
   obtaining statistical information on said given query through a retrieval of said document database with respect to said given query;
   calculating a second feature vector with respect to said given query from said statistical information;
   calculating a degree of similarity between said second feature vector and each of said first feature vectors; and
   selecting such words as yield degrees of similarity higher than a predetermined value.

2. A method of claim 1, wherein said step of preparing a feature vector table comprises the steps of:

   generating an index file from said document database, said index file being such that statistical information for each of words used in said document database can be obtained from said index file; and
   calculating each first feature vector from said index file, and
   wherein said step of obtaining statistical information comprising the step of searching said index file for said given query.

3. A method of extracting similar words for a given sequence of letters from a document database of documents, the occurrence pattern of the similar words being similar to that of the given sequence, the method comprising the steps of:

   preparing a feature vector table which contains a first feature vector for each of words in said document database;
   obtaining statistical information on said given sequence through a retrieval of said document database with respect to said given sequence;
   calculating a second feature vector with respect to said given sequence from said statistical information;
   calculating a degree of similarity between said second feature vector and each of said first feature vectors; and
   selecting such words as yield degrees of similarity higher than a predetermined value.

4. In a document retrieval system comprising a first document database and a retriever, a method of expanding a given query to supply a expanded query to the retriever, the method including the steps of:

   extracting similar words of said given query or a query word in said given query from a second document database of documents, the occurrence pattern of said similar words being similar to that of said given query or said query word; and
   utilizing said similar words of said given query or said query word for said given query, wherein said step of extracting said similar words comprises the steps of:
   preparing a feature vector table which contains a first feature vector for each of words in said second document database;
   obtaining statistical information on said query or said query word through a retrieval of said second document database with respect to said query or said query word;
   calculating a second feature vector with respect to said query or said query word from said statistical information;
   calculating a degree of similarity between said second feature vector and each of said first feature vectors; and

selecting, as said similar words, such words as yield degrees of similarity higher than a predetermined value.

**5.** A method of claim 4, wherein said first and second document databases are the same thing.

**6.** A method of receiving any given sequence of letters in a source language and providing translations in a target language such that an occurrence pattern of said given sequence in a source-language document database being the same as that of translations in a target-language document database wherein one of said two document databases is a translation of the other, the method comprising the step of:

preparing a feature vector table which contains a first feature vector for each of words in said target-language document database;

obtaining statistical information on said given sequence through a retrieval of said source-language document database with respect to said given sequence;

calculating a second feature vector with respect to said given sequence from said statistical information;

calculating a degree of similarity between said second feature vector and each of said first feature vectors; and

selecting, as said translations, such target-language words as yield degrees of similarity higher than a predetermined value.

**7.** A method of claim 6, wherein said step of preparing a feature vector table comprises the steps of:

generating an index file from said target-language document database, said index file being such that statistical information for each of words used in said target-language document database can be obtained from said index file; and

calculating each first feature vector from said index file, and

wherein said step of obtaining statistical information comprising the step of searching said index file for said given sequence.

**8.** In a document retrieval system comprising a first document database and a retriever, a query expanding method of converting a source-language query into a target-language query to feed the retriever, the method including the steps of:

extracting a translation of each of query words in said source-language query from a second document database of target-language documents, the occurrence pattern of said translation being similar to that of each query word; and

replacing each query word in said source-language query with said translation of said query word, wherein said step of extracting said translation comprises the steps of:

preparing a feature vector table which contains a first feature vector for each of words in said target-language document database;

obtaining statistical information on said query word through a retrieval of said source-language document database with respect to said query word;

calculating a second feature vector with respect to said query word from said statistical information;

calculating a degree of similarity between said second feature vector and each of said first feature vectors; and

selecting, as said translations, such target-language words as yield degrees of similarity higher than a predetermined value.

**9.** A method of receiving a given letter sequence and providing bisected letter sequences with a sufficient propriety of division, the method comprising the steps of:

forming a retrieval expression for retrieving documents which contains all of the letters of said letter sequence but does not contain said letter sequence itself;

obtaining statistical information by executing a retrieval based on said retrieval expression;

generates a feature vector for said retrieval expression from said statistical information, said feature vector being referred to as "mask feature vector";

dividing said letter sequence into two subsequences shifting the division point one by one to obtain N-1 sets of bisected letter sequences, where N is the number of letters in said letter sequence;

calculate a feature vector for each of said bisected letter sequences of each of said N-1 sets;

masks each of said calculated feature vectors with the mask feature vector and normalizing the masked calculated feature vector;

calculating a degree of similarity for each of said N-1 sets, said degree of similarity being defined as an inner product of said bisected letter sequences of each of said N-1 sets; and

outputting such bisected letter sequences as have a degree of similarity larger than a threshold.

10. In a system provided with translation means for receiving a given word in a first language and providing translations in a second language such that an occurrence pattern of said given word in a first-language document database being the same as that of translations in a second-language document database wherein one of said two document databases is a translation of the other, wherein said translation means comprise a feature vector table which contains a first feature vector for each of words in said second-language document database; means for obtaining statistical information on said query word through a retrieval of said first- language document database with respect to said query word; means for calculating a second feature vector with respect to said query word from said statistical information; means for calculating a degree of similarity between said second feature vector and each of said first feature vectors; and means for selecting, as said translations, such second-language words as yield degrees of similarity higher than a predetermined value, a method of finding, for a given word, at least one variant including the given word, the method comprising the steps of:

obtaining said translations for said given word by using said translation means;

reconfiguring said translation means by replacing said feature vector table with a feature vector table which contains a third feature vector for each of words in said first-language document database and by exchanging said first-language document database and said second-language document database; and

obtaining, as said at least one variant, second translations for each of said translations by using reconfigured translation means.

11. A system of extracting similar words for a given query from a document database of documents, the occurrence pattern of the similar words being similar to that of the given query, the system comprising:

means for preparing a feature vector table which contains a first feature vector for each of words in said document database;

means for obtaining statistical information on said given query through a retrieval of said document database with respect to said given query;

means for calculating a second feature vector with respect to said given query from said statistical information;

means for calculating a degree of similarity between said second feature vector and each of said first feature vectors; and

means for selecting such words as yield degrees of similarity higher than a predetermined value.

12. In a document retrieval system comprising a first document database and a retriever, a system for expanding a given query to supply a expanded query to the retriever, the system comprising:

means for extracting similar words of said given query or a query word in said given query from a second document database of documents, the occurrence pattern of said similar words being similar to that of said given query or said query word; and

means for utilizing said similar words of said given query or said query word for said given query, wherein said means for extracting said similar words comprises:

means for preparing a feature vector table which contains a first feature vector for each of words in said second document database;

means for obtaining statistical information on said query or said query word through a retrieval of said second document database with respect to said query or said query word;

means for calculating a second feature vector with respect to said query or said query word from said statistical information;

means for calculating a degree of similarity between said second feature vector and each of said first feature vectors; and

means for selecting, as said similar words, such words as yield degrees of similarity higher than a predetermined value.

13. A method of claim 12, wherein said first and second document databases are the same thing.

# FIG. 1

SERVER 10

30

34 INDEX GENERATOR

33 DOCUMENT DATABASE

32

QUERY

31 QUERY EXPANDER

EXPANDED QUERY

35 INDEX

36 DOCUMENT RETRIEVER

DOCUMENT DATABASE & RETRIEVAL ENGINE

RETRIEVED RESULTS

MASS STORAGE

40 COMMUNICATION INTERFACES

20 PROCESSOR(S) AND MEMORIES

50 USER INTERFACE

60 INPUT & OUTPUT DEVICES

12 COMMUNICATION MEDIA

1

CLIENT 14

CLIENT 14

CLIENT 14

# FIG. 2

# FIG. 3

```
            ┌───────────────┐
            (     START     )          130
            └───────┬───────┘          ‾‾‾
                    │
                    ▼
```

SEARCHE THE SECOND INDEX FILE 134 ON THE BASIS OF ⟋136
THE RECEIVED QUERY TERM $q_k$; AND OUTPUT THE TERM
FREQUENCY OF THE QUERY TERM, $tf(q_k, i)$, FOR EACH
DOCUMENT Di AND THE INVERSE DOCUMENT FREQUENCY
FOR THE QUERY TERM, $idf(q_k)$

CALCULATE A FEATURE VECTOR $q_k$ FOR A GIVEN ⟋138
QUERY TERM, $q_k$

MARK THE RECORDS WHICH SHOULD BE SUBJECTED TO ⟋140
THE FOLLOWING PROCESS IN THE FEATURE VECTOR
TABLE 160

CALCULATE A MEASURE OF SIMILARITY BETWEEN THE ⟋142
CALCULATED FEATURE VECTOR $q_k$ AND EACH OF THE
MARKED-RECORD FEATURE VECTORS IN THE FEATURE
VECTOR TABLE 160

RANK THE MARKED-RECORD WORDS IN THE ORDER OF ⟋144
THE CALCULATED MEASURES OF SIMILARITIES

OUTPUT THE WORDS WITH A SIMILARITY HIGHER THAN ⟋146
A PREDETERMINED VALUE AS THE SIMILAR WORDS

```
            ┌───────────────┐
            (      END      )
            └───────────────┘
```

# FIG. 4

162   166                                    160                      164

| WORD | MARK | CATE 1 | CATE 2 | -------- | FEATURE VECTOR |

168

# FIG. 5

START                    31a

SELECT A FIRST TERM FORM A GIVEN QUERY    102

A →

FIND SIMILAR WORDS FOR THE SELECTED TERM    104

A SIMILAR WORD EXTRACTOR

REPLACE THE SELECTED TERM WITH A LOGICAL SUM OF THE FOUND SIMILAR WORDS IN THE QUERY    106

108
ARE THE TERMS EXHAUSTED IN THE QUERY ?    NO

YES

110
SELECT A NEXT TERM FORM THE GIVEN QUERY

B →

PASS THE EXPANDED QUERY TO THE DOCUMENT RETRIEVER 36    112

END

# FIG. 6

FEATURE VECTOR TABLE

| | | | | | |
|---|---|---|---|---|---|
| "retrieval" | 0.15 | 0.00 | 0.01 | ------- | 0.10 |
| "information" | 0.09 | 0.01 | 0.07 | ------- | 0.08 |
| "robot" | 0.00 | 0.05 | 0.10 | ------- | 0.01 |
| "processor" | 0.01 | 0.10 | 0.05 | ------- | 0.00 |
| "memory" | 0.00 | 0.03 | 0.15 | ------- | 0.02 |
| ⋮ | | | | | |
| "computer" | 0.05 | 0.04 | 0.00 | ------- | 0.00 |

SL : SOURCE LANGUAGE
TL : TARGET LANGUAGE

TERM FREQUENCY FOR $q_k$

| i | 1 | 2 | 3 | ------- | M |
|---|---|---|---|---|---|
| tf($q_k$, i) | 10 | 0 | 2 | ------- | 7 |

CALCULATED FEATURE VECTOR FOR $q_k$

| "情報検索" | 0.10 | 0.00 | 0.02 | ------- | 0.07 |
|---|---|---|---|---|---|

SIM( "情報検索" , "retrieval" ) = 0.8
SIM( "情報検索" , "information" ) = 0.7
SIM( "情報検索" , "robot" ) = 0.4
⋮
SIM( "情報検索" , "computer" ) = 0.1

TRANSLATION
"retrieval"
"information"

EP 1 072 982 A2

# FIG. 7

START                    31b

CONVERT A GIVEN QUERY INTO A SUM-OF-PRODUCT FORM                    122

A ——▸

PASS EACH OF THE PRODUCTS IN THE SUM TO THE EXTRACTOR 130 TO OBTAIN THE RESULTS (I.E., SIMILAR WORDS OR TRANSLATIONS)                    124

A SIMILAR WORD/TRANSLATION EXTRACTOR

B ——▸

PASS THE LOGICAL SUM OF THE RESULTS TO THE DOCUMENT RETRIEVER 36                    126

END

EP 1 072 982 A2

# FIG. 8

```
                    ( START )                    200

   ┌─────────────────────────────────────────────┐
   │ FROM A LETTER SEQUENCE "L1 L2 L3 ··· Ls ",   │  202
   │ FORM A RETRIEVAL EXPRESSION                  │
   │ (L1<and>L2<and>L3 ··· <and>Ls) <not>L1 L2 L3 ··· Ls │
   └─────────────────────────────────────────────┘

   ┌─────────────────────────────────────────────┐
   │ RETRIEVE THE DOCUMENTS THAT SATISFY THE RETRIEVAL │  204
   │ EXPRESSION AND OBTAIN STATISTICAL INFORMATION │
   └─────────────────────────────────────────────┘

   ┌─────────────────────────────────────────────┐
   │ GENERATE A FEATURE VECTOR FOR THE RETRIEVAL  │  206
   │ EXPRESSION (REFERRED TO AS "MASK FEATURE VECTOR") │
   └─────────────────────────────────────────────┘

   ┌─────────────────────────────────────────────┐
   │ DIVIDE THE LETTER SEQUENCE INTO TWO PARTS    │  208
   │ SHIFTING THE DIVISION POINT ONE BY ONE TO OBTAIN │
   │ s-1 SETS OF DIVIDED SEQUENCES                │
   └─────────────────────────────────────────────┘

   ┌─────────────────────────────────────────────┐
   │ CALCULATE A FEATURE VECTOR FOR EACH DIVIDED  │  210
   │ SEQUENCE IN EACH SET                         │
   └─────────────────────────────────────────────┘

   ┌─────────────────────────────────────────────┐
   │ MASK EACH OF THE CALCULATED FEATURE VECTORS  │  212
   │ WITH THE MASK FEATURE VECTOR ; AND NORMALIZE │
   │ THE MASKED VECTOR                            │
   └─────────────────────────────────────────────┘

   ┌─────────────────────────────────────────────┐
   │ FIND A DEGREE OF SIMILARITY FOR EACH SET BY  │  214
   │ CALCULATING AN INNER PRODUCT OF THE FEATURE  │
   │ VECTORS OF THE SET                           │
   └─────────────────────────────────────────────┘

   ┌─────────────────────────────────────────────┐
   │ OUTPUT DIVIDED SEQUENCES OF THE DIVIDABLE LETTER │  216
   │ SEQUENCE                                     │
   └─────────────────────────────────────────────┘

                    ( END )
```

21

## FIG. 9

INPUT SEQUENCE
OF LETTERS

"自立移動ロボット"

RETRIEVAL
EXPRESSION

(自<and>立<and>移<and>動<and>ロ<and>ボ<and>ツ<and>ト)<not>自立移動ロボット

## FIG. 10

INPUT LETTER SEQUENCE

SEVEN SETS OF
DIVIDED SEQUENCES

"自立移動ロボット"

↑ ↑ ↑ ↑ ↑ ↑ ↑
1 2 3 4 5 6 7

DIVISION POINTS

SEVEN
DIVISIONS

(自、律移動ロボット)
(自律、移動ロボット)
(自律移、動ロボット)
(自律移動、ロボット)
(自律移動ロ、ボット)
(自律移動ロボ、ット)
(自律移動ロボッ、ト)

## FIG. 11

IDENTICAL

MASK FEATURE VECTOR (o,×,×,×,o,×,×,o,o,o,o, ···· o,o,o,×) = (o,×,×,×,o,×,×,o,o,o,o, ···· o,o,o,×)

FEATURE VECTOR
FOR SEQUENCE "自"

(o,×,o,×,o,×,×,o,×,×,o, ···· ×,o,×,×)

(o,o,o,×,o,o,×,o,×,×,o, ···· ×,o,×,o)

FEATURE VECTOR FOR
SEQUENCE "律移動ロボット"

RESULTANT
FEATURE VECTORS

(o,×,o,×,o,×,×,o,o,o,o, ···· o,o,o,×)

(o,o,o,×,o,o,×,o,o,o,o, ···· o,o,o,o)

o : A VALUE OF ZERO
× : A POSITIVE VALUE

EP 1 072 982 A2

# FIG. 12

| | DEGREE OF SIMILARITY | DIVISION PROPRIETY | |
|---|---|---|---|
| (自、律移動ロボット) | 0.01 | NO | |
| (自律、移動ロボット) | 0.40 | YES | |
| (自律移、動ロボット) | 0.02 | NO | |
| (自律移動、ロボット) | 0.50 | YES | |
| (自律移動ロ、ボット) | 0.02 | NO | THRESHOLD=0.35 |
| (自律移動ロボ、ット) | 0.01 | NO | |
| (自律移動ロボッ、ト) | 0.02 | NO | |

# FIG. 13

```
           ( START )              300

   ATTACH A FIRST-LANGUAGE INDEX FILE AND A SECOND-      302
   LANGUAGE FEATURE VECTOR TABLE TO THE TRANSLATION
   EXTRACTOR 130

   FIND SECOND-LANGUAGE TRANSLATION(S) OF AN INPUT       304
   FIRST-LANGUAGE QUERY TERM BY USING THE
   TRANSLATION EXTRACTOR 130

   REPLACE THE FIRST-LANGUAGE INDEX FILE AND THE         306
   SECOND-LANGUAGE FEATURE VECTOR TABLE WITH A
   SECOND-LANGUAGE INDEX FILE AND A FIRST-LANGUAGE
   FEATURE VECTOR TABLE IN THE TRANSLATION
   EXTRACTOR 130

   FIND FIRST-LANGUAGE TRANSLATION(S) OF EACH THE        308
   SECOND-LANGUAGE TRANSLATION(S) BY USING THE
   TRANSLATION EXTRACTOR 130

           ( END )
```